Europäisches Patentamt

European Patent Office

Office européen des brevets

(11) Publication number: **0 562 138 A1**

# EUROPEAN PATENT APPLICATION

(21) Application number: **92105090.2**

(22) Date of filing: **25.03.92**

(51) Int. Cl.⁵: **G10L 5/06**

(43) Date of publication of application:
**29.09.93 Bulletin 93/39**

(84) Designated Contracting States:
**DE ES FR GB IT**

(71) Applicant: **INTERNATIONAL BUSINESS MACHINES CORPORATION**

**Armonk, NY 10504(US)**

(84) **DE ES FR GB**

(71) Applicant: **IBM SEMEA S.p.A.**
**Via Pirelli 18, P.O. Box 137**
**I-20124 Milan(IT)**

(84) **IT**

(72) Inventor: **Ferreti, Marco**
**Via dell'Aquila Reale 13**
**I-00169 Roma(IT)**
Inventor: **Mazza, Anna Maria**
**Via Calimno, 37**
**I-00141 Roma(IT)**
Inventor: **Scarci, Stefano**
**Via Cesare Pavese 267**
**I-00144 Roma(IT)**

(74) Representative: **Lettieri, Fabrizio**
**IBM SEMEA S.p.A., Direzione Brevetti, MI**
**SEG 534, P.O. Box 137**
**I-20090 Segrate (Milano) (IT)**

(54) **Method and apparatus for the automatic generation of Markov models of new words to be added to a speech recognition vocabulary.**

(57) A method and apparatus for generating a word model to be used in a speech recognizer based on the spelling of the word and one utterance of the word by the user, are described. In a first step a list of all the possible phonetic transcriptions for the new word is produced using phonotactical knowledge of the language. In a second step a score is computed for each transcription of the list, combining the score obtained matching the utterance against the Hidden Markov Models derived from its possible phonetic transcriptions and the a priori probability of the phonetic transcription. The phonetic transcription with the highest score is selected as the correct one.

Fig. 1

The present invention relates to a method and an apparatus for automatically generating Markov word models of new words to be added to a predefined vocabulary. The Markov word models are primarily for use in speech recognition applications, they may however be employed in phonetic applications where the description of a word pronunciation is sought.

In many approaches to speech recognition, Hidden Markov Models (HMM) are used as models for each word in a predefined speech recognizer vocabulary. HMM is a very well-known technique to represent acoustic word models for speech recognition.

This technique is described in various articles such as: "Continuous Speech Recognition by Statistical Methods" by F. Jelinek, Proceedings of the IEEE, vol. 64, number 4, 1976, pages 532-556 and "A Maximum Likelihood Approach to Speech Recognition", by L.R. Bahl, F. Jelinek, and R.L. Mercer, IEEE Transactions on Pattern Analysis and Machine Intelligence, volume PAMI-5, No 2, March 1983, pages 179-190.

In a speech recognition system, a matching process is performed to determine which word or words in the vocabulary are the most likely to have produced the string of labels generated by the acoustic processor of the system.

The acoustic processor is a device able to transform the speech waveform input into a string of fenemes, called also labels. The labels are selected from an alphabet typically containing 200 different labels. The generation of such labels has been discussed in articles of the prior art and, in particular, in European Patent No 0 179 280 entitled "Nonlinear Signal Processing in a Speech Recognition System". The matching procedure is described in European Patent No 0 238 689 entitled "Method for performing Acoustic Matching in a Speech Recognition System".

Acoustic matching is performed by characterizing each word in a vocabulary by a sequence of Markov model phone machines and determining the respective likelihood of each word representing a sequence of phone machines. Each sequence of phone machines representing a word is called word model, sometimes referred to as word baseform or simply baseform.

In a speech recognition system, two different types of word baseforms are normally used: phonetic baseforms and fenemic baseforms. Either phonetic baseforms or fenemic baseforms may be used in acoustic matching or for other speech recognition purposes.

Phonetic baseforms are built concatenating phonetic Markov models. Typically such Markov models have a one-to-one correspondence with phonetic elements. The Markov models corresponding to the sequence of phonetic elements of a word can be concatenated to form a phonetic Markov word baseform for the word. The generation of phonetic baseforms is described in European Patent No. 0 238 695 entitled "Automatic generation of simple Markov model stunted baseforms for words in a vocabulary".

Fenemic baseforms are constructed concatenating fenemic Markov word models. These models are described in European Patent No. 0 238 693 entitled "Speech Recognition System and Method Using Statistical Models for Words". For each of the 200 fenemes in a fenemic alphabet, a Markov model is provided which indicates the probability of a particular feneme producing zero, one, or more fenemes (as generated by the acoustic processor) when spoken. With the fenemic baseforms the number of phone machines in each word baseform is approximately equal to the number of fenemes per word.

In the probabilistic approach to speech recognition, the vocabulary of the recognizer contains a predefined set of words. The vocabulary usually contains several thousands of words. Generally, the set of words in the vocabulary is chosen according to the application of the speech recognition system in order to minimize the number of words not included in the vocabulary but uttered by the user during the normal use of the system. The percentage of words uttered by the user and included in the vocabulary is called vocabulary coverage.

The vocabulary coverage is strongly dependent on the vocabulary size and type of application. For vocabularies containing from 10,000 to 20,000 words, the coverage typically ranges from 80% to 99% according to the type of lexicon involved. Due to real-time constraints, the vocabulary of the speech recognizer for the Italian language is generally limited to about 20,000 words as described in the article "A 20,000-Word Speech Recognizer of Italian" by M. Brandetti, M. Ferretti, A. Fusi, G. Maltese, S. Scarci, G. Vitillaro, Recent Issues in Pattern Analysis and Recognition, Lecture Notes in Computer Science, Springer-Verlag, 1989.

A vocabulary containing 20,000 words allows high coverages (usually about 96-97%), nevertheless the users of a speech recognition system feel the need that the system can recognize words not included in the vocabulary but typical of their activity and environment (last names, street names, jargon words and so on). Besides it is not sure that even a larger vocabulary would include such words. In many applications this drawback can be a severe constraint to the practical usability of the speech recognizer. Therefore it is necessary to provide a feature to allow a user to add new words to the predefined vocabulary of the recognizer. The new words to be added are usually called "add-words".

As described before, each word in the vocabulary is represented by statistical models that must be created a priori and are part of the recognizer. There are two models for each word: a phonetic word baseform and a fenemic word baseform. To add a new word to the vocabulary of the speech recognizer, either the phonetic or the fenemic word models must be supplied. Starting from the correct phonetic word model, a technique exists to automatically construct the corresponding fenemic word model. This technique is described in the article "Automatic Construction of Fenemic Markov Word Models for Speech Recognition" by M. Ferretti, S. Scarci, IBM Technical Disclosure Bulletin, vol. 33, No. 6B, November 1990, pages 233-237.

The problem of producing the acoustic models needed to add a new word to the vocabulary can be thus reduced to the problem of producing the correct phonetic transcript ion for the word. Several solutions to this problem have been proposed.

The easiest solution is the Dictionary Look-Up. When a new word has to be added, the retrieval of the correct phonetic transcription from a background dictionary is performed. This solution has several limitations, one of which is that it is not conceivable to have a vocabulary containing all the possible add-words (e.g. proper names).

Another solution is to use a rule-based system that, starting from the spelling of the word, determines how the word is pronounced. Several systems based on this idea have been built, but unfortunately the accuracy of the phonetic transcription produced is too low to make this technique feasible for speech recognition systems. For this solution there are some limitations: it is very difficult to build a set of rules able to solve all the ambiguities in the grapheme-to-phoneme translation, since for many words the pronunciation depends on the linguistic meaning; this kind of ambiguity cannot be solved by a rule-based system.

More sophisticated and reliable techniques have been developed by researchers of the IBM T.J Watson Research Center. Such techniques are based on the idea of finding a statistical set of Spelling-to-Sound Rules as described in the article "Automatic Determination of the Pronunciation of Words from their Spelling" by R.L. Bahl, P.F. Brown, P.V. De Souza, R.L. Mercer, IBM Technical Disclosure Bulletin, No. 10B, March 1990, pages 19-23. The rules are used as a language model to perform decoding of a spoken utterance as the add-word using a technique similar to the stack search described in the above-mentioned article "A Maximum Likelihood Approach to Continuous Speech Recognition", IEEE Transactions on Pattern Analysis and Machine Intelligence, and in the article "The Development of an Experimental Discrete Dictation Recognizer", by F. Jelinek, Proc. of IEEE. Vol. 73, No. 11, Nov. 1985, Pages 1616-1624.

In this approach, it is assumed that no a priori constraint about the set of possible phoneme sequences representing the add-word pronunciation can be provided. A search strategy is used to find an optimal phonetic transcription among all the possible ones. The drawback with this technique is the computational time required. Employing special hardware to perform the acoustic match, the technique can take several seconds to produce the results.

Another solution is described in European Patent Application No. 91116859.9 entitled "Method and Apparatus for Generating Models of Spoken Words Based on a Small Number of Utterances". For this solution the drawback derives from the fact that more than one utterance for each new word is required to produce the new phonetic transcription.

It is, therefore, an object of this invention to provide a technique able to take advantage of characteristics of some natural languages to make the add-word process simpler. If the grapheme-to-phoneme translation has low ambiguity in a language (e. g. Italian), it is possible to limit, given the spelling of the add-word, the set of admissible pronunciations eliminating the very time-consuming search process.

It is an object of the invention to automatically build a phonetic Markov word model for a new word starting from its spelling and from one utterance spoken by the user. The invention, as defined in the claims, is able to produce the correct phonetic transcription for any new word in a few seconds without the need to use special-purpose hardware.

The invention is here described with reference to the Italian language and using Italian words as examples of words of which the correct phonetic transcription is searched. However the same concepts can be applied to other languages having a low ambiguity in grapheme-to-phoneme translation.

Fig. 1 is a block diagram of an apparatus for generating the correct phonetic transcription of a new word according to the present invention.

Fig. 2 is a block diagram for obtaining a weighted combination for the best-of-set score calculation.

According to the method of the present invention, when the user of the system wishes to add a new word to the vocabulary, he/she must provide the word spelling and then one utterance. The standard way to produce a reliable phonetic transcription is to use human knowledge to decide, on the basis of linguistic knowledge, about the word meaning.

Some words in a language may have more than one pronunciation according to their meaning. In these cases it is not possible to solve the ambiguity using standard techniques to automatically produce the correct word phonetic transcription. Only with the intervention of a phonetician is it possible to associate the word spelling with the sequence of phonetic symbols describing its correct pronunciation.

The basic set of sounds used to utter Italian words, as described by classical phonetics, includes 30 phonemes, each represented by its respective symbol. However, since the set of 30 phonemes cannot give an adequate account of many relevant contextual variations in pronunciation, the set of phones used by the Italian speech recognizer of the present invention is an extension of such phoneme set.

To describe the present invention, a set of 56 phonemes is used to take into account the acoustical phenomena necessary to achieve a high recognition rate. However, an adequate set of phonemes can be selected for each language on the basis of the desired recognition rate.

The basic idea of the invention is to use phonotactical knowledge and linguistic knowledge separately. The process of producing the correct phonetic transcription for the new word is divided into two steps. In the first step, phonotactical knowledge is used to produce a list of all the possible phonetic transcriptions for the word. In the second step, a score is computed for each phonetic transcription combining the score obtained matching the word utterance of the user against the HMM derived from its transcription and the a priori probability of the phonetic transcription. The phonetic transcription with the highest score is selected as the correct one.

Phonotactical knowledge allows to find all the ways in which the letters of the word spelling correspond to the sounds in order to form a word utterance. It is possible to describe phonotactical knowledge for each language by an appropriate set of rules. For example, for the Italian language, phonotactical knowledge can be descibed using only 78 rules, as described in the paper "Automatic Transcription Based on Phonotactical Rules", by S. Scarci, S. Taraglio, Proceedings of Speech 1988 Seventh FASE Symposium, Edinburgh, 1988. Each rule determines the way a letter in the word spelling can be pronounced (e.g. a vowel can be stressed or not) Generally the format of a rule is based on the following pattern:

LL CL RL --> LP

where CL is the current letter in the word spelling, LL is the letter on the left of the current letter, RL is the letter on the right of the current letter and LP is the list of possible phonetic units for the current letter CL in the context LL-RL.

In the present description, a two-stage translation is performed using two different phonetic alphabets.

A first alphabet has been derived directly from the standard set of Italian phonemes, here referred to as phonetic alphabet P1.

A second alphabet, P2, contains phonetic units not considered by standard phonetics and introduced to improve the recognition rate.

While alphabet P1 can be considered invariable, alphabet P2 may vary in the future according to new knowledge acquired on the pronunciation behaviour of speakers. For this reason two phonetic transcriptions are produced: in the first stage from graphemes to symbols of P1, and in the second stage from symbols of P1 to symbols of P2.

The P1 and P2 phonetic alphabets are shown in Table 1 and 2 respectively. Table 3 shows the set of rules used to produce all the possible phonetic transcriptions of a word using the P1 alphabet. Table 4 shows the set of rules used to perform the translation from alphabet P1 into phonetic alphabet P2.

Before performing the translation from alphabet P1 into alphabet P2, a set of global rules is used to prune all impossible phonetic transcriptions (e.g. all the phonetic transcriptions having more than one stressed syllable).

It was observed that, at the end of the process, the correct phonetic transcription is always included in the list of candidate transcriptions. The average number of possible phonetic transcriptions for an Italian word is 5.1. It is possible to easily create a device able to apply these rules to an input spelling and to produce as output all the possible phonetic strings. For example a computer program could be used to implement such a device.

When the list of candidate phonetic transcriptions has been completed, the utterance of the new word and probabilistic decision trees are used to perform the selection of the correct one. For this purpose, the utterance of the word is processed by the acoustic feature processor of the recognition system, designed to transform a speech waveform input into a string of acoustic labels. Given the string of acoustic labels, the phonetic transcription having the highest probability to represent the utterance of the word is selected as the correct phonetic transcription.

The highest probability is obtained by computing the maximum of $P(T|U)$ where $T$ is a phonetic transcription in the list produced at the end of the phonetic transcription process and $U$ is the word string of labels corresponding to the utterance.

Applying the Bayes theorem, P(T|U) can be expressed as:

$$P(T|U) = \frac{P(U|T) * P(T)}{P(U)} \qquad (1)$$

where:

P(U|T) is the probability that the speaker, pronouncing the sequence of phones T, will utter sounds described by U.

P(T) is the probability of the phonetic baseform.

P(U) is the a priori probability of utterance U.

To maximize expression (1) with respect to all possible transcriptions T, the denominator of the fraction can be ignored, since P(U) is independent of T.

P(U|T) is computed by means of the standard forward-pass algorithm using the candidate phonetic baseforms as phonetic Hidden Markov word models as described in the cited European Patent No. 0 238 689.

P(T) is computed for each candidate transcription by means of binary decision trees. Binary decision trees are described in the publication "Classification and Regression Trees" by L. Breiman, J. Friedman, R. Olshen, C. Stone, Wadsworth & Brooks/Cole Advanced Book & Software, 1984.

A binary decision tree is a computational technique that allows to compute the probability of a target variable, given its context. Given a target variable and an observed context, a visit of the decision tree is performed to compute the target probability. At each node of the tree a predefined question is asked about the right or left context of the variable to be predicted. According to the answer (that can be Yes or No) the left or right child node is selected as the next node. When a leaf is reached a probability distribution is found that assigns a probability to all the possible values of the variable. The tree can be built a priori using well-known training techniques.

To perform the tree training, the availability of a considerable amount of correct phonetic transcriptions is assumed. 25,000 correct phonetic transcriptions are considered a sufficient amount of data to produce well-trained binary decision trees. For the Italian language, 5 binary decision trees are built, one for each Italian vowel. In fact, for the Italian language, most of the pronunciation ambiguities are related to the vowels pronunciation.

P(T) is computed as the product of the probability of each phone in the transcript ion T, given its context. Therefore P(T) is equal to P(T|S) where S is the spelling of the word and can be written as:

$$P(T|S) = P(t_1, \ldots t_n | s_1, \ldots s_n) \qquad (2)$$

where $t_1, t_2, \ldots, t_{n-1}, t_n$ are phones of the transcription T
and $s_1, s_2, \ldots s_n$ are letters of word spelling.

Expression (2) can be computed as:

$$P(t_n | s_1, \ldots s_n) * P(t_{n-1} | t_n, s_1, \ldots s_n)^* \ldots P(t_1 | t_2, \ldots t_n, s_1, \ldots s_n)$$

The last expression is approximated by using the following context:
5 letters to the left of the current vowel
5 letters to the right of the current vowel
5 phones to the right of the current phone.

A probability equal to 1 is assigned to each non-vowel phone.

The final score for each candidate transcription in the list is computed in the following way:

$$S = w_1 \log P(U|T) + w_2 \log P(T)$$

where the optimal weights $w_1$ and $w_2$ are found by an iterative process that modifies the weights to minimize the number of incorrect phonetic transcriptions.

After describing the method, a brief description of an apparatus for implementing such a method is here given.

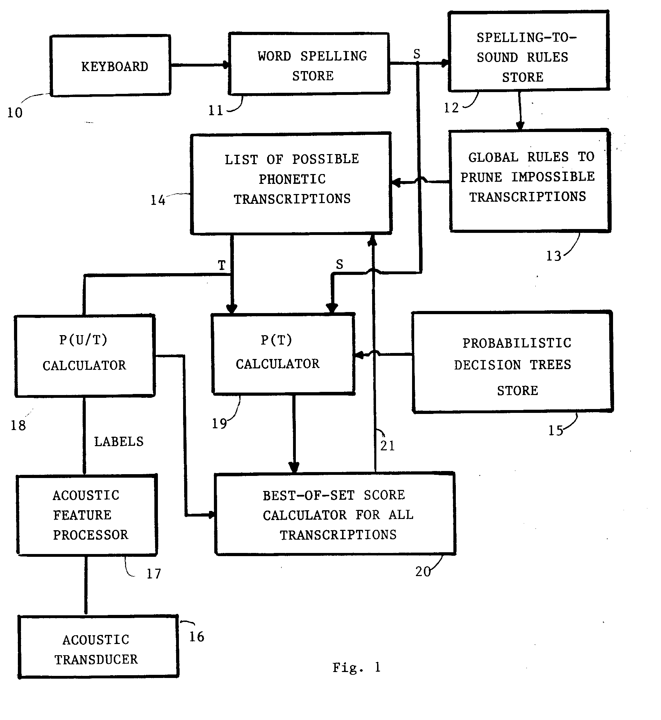

Fig.1 shows an example of an apparatus for generating the most likely phonetic transcription of a new word according to the present invention. With reference to Fig.1, when the user of the speech recognition system wishes to add a new word to the vocabulary of the system, he/she keys the word on keyboard 10 and its spelling is stored in store 11. Using the set of rules stored in store 12, the apparatus determines the phonetic transcriptions of the word, acceptable on the basis of the phonetic rules of the language. A set of global rules, stored in store 13, allows to prune such phonetic transcriptions, eliminating for example all the phonetic transcriptions with more than one accent. At the end of this step, store 14 contains all the possible phonetic transcriptions and naturally also the correct one.

Then the user of the speech recognition system pronounces the new word, emitting an utterance U. An acoustic transducer 16, e.g. a microphone, converts the utterance U into an analog electrical signal and an acoustic feature processor 17 outputs a string of acoustic labels, each label representing an acoustic feature prototype vector.

P(T) calculator 19 determines the probability of each phonetic transcription stored in store 14, considering the left and the right context of each letter of the spelling S, stored in store 11 and utilizing a probabilistic binary decision tree computation, based on the information stored in store 15.

P(U|T) calculator 18, using the string of labels derived from the utterance U of the new word and each phonetic transcription stored in store 14, determines the probability that the user, pronouncing the string of phones contained in each transcription will utter the sounds described by the string of labels of the utterance U.

The best-of-set score calculator 20 receives input from P(U|T) calculator 18 and P(T) calculator 19 and identifies, for each transcription, the product P(U|T)*P(T). Once all the phonetic transcriptions of the new word, contained in store 14, have been considered, score calculator 20 identifies the one with the maximum product and emits a command on line 21 for marking that phonetic transcription in store 14 as the correct one.

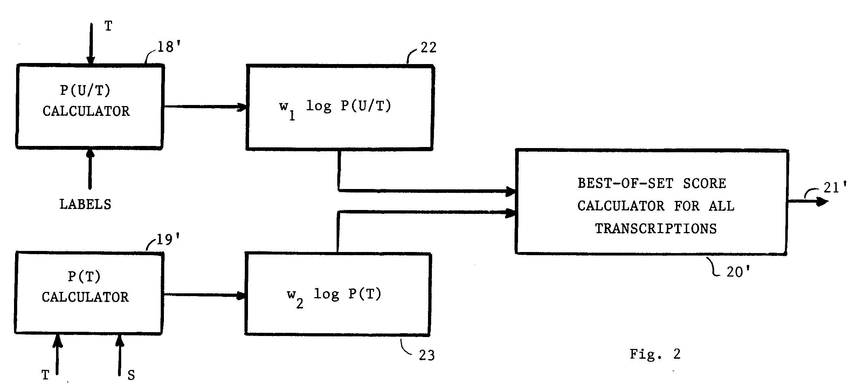

Fig.2 shows an embodiment for improving the determination of the phonetic transcript ion with the best-of-set score. In such embodiment, the output of P(U|T) calculator 18' is sent to block 22 which calculates the log of P(U|T), multiplied by weight $w_1$. Similarly, the output of P(T) calculator 19' is sent to block 23 which determines the log of P(T), multiplied by weight $w_2$. Calculator 20' selects the most likely phonetic transcription on the basis of the best-of-set score as in Fig.1

Having obtained the correct phonetic transcription of a new word, using the technique shown in the aforecited article "Automatic Construction of Fenemic Markov Models for Speech recognition", it is possible obtain the fenemic word baseform. Having thus determined either the phonetic or the fenemic word models, the new word can be included in the vocabulary of the speech recognition system.

A test of the invention method was performed using 2,000 words uttered by one speaker and not included in the set of words used to perform decision trees' training. The average accuracy of the phonetic transcription obtained by the invention method was found equal to that obtained when the transcriptions are made by a phonetician.

As examples of the method here described, it is assumed that the Italian words "alato" and "mostrarvi" are two words for which it is desired to determine the phonetic transcript ion. Using an iterative process, $w_1$ was set equal to 0.2 and w2 was set equal to 1. P(U|T) is expressed in a normalized format to avoid too small numerical values.

Example 1: "alato"

The list of candidate baseforms for "alato" in symbols of alphabet P2 is given hereunder:
Baseform 1: AS L1 AA TH OA SP
Baseform 2: AA L1 AS TH OA SP
For baseform 1: log P(U|T) = 12.34     log P(T) = -1.60
For baseform 2: log P(U|T) = 28.86     log P(T) = -0.13
The final score is:
For baseform 1: $S_1$ = 0.868
For baseform 2: $S_2$ = 5.642
Therefore the most likely baseform for the word "alato" is:
AA L1 AS TH OA SP
The selected baseform is the correct one.

Example 2: "mostrarvi"

The list of candidate baseforms for "mostrarvi" in symbols of alphabet P2 is the following:

Baseform 1: MH OO SH TH RR AS RH VH IO SP
Baseform 2: MH OS SH TH RR AA RH VH IO SP
Baseform 3: MH OC SH TH RR AA RH VH IO SP

For baseform 1: $\log P(U|T) = 19.68$     $\log P(T) = -0.013$
For baseform 2: $\log P(U|T) = 2.34$     $\log P(T) = -2.58$
For baseform 3: $\log P(U|T) = 1.27$     $\log P(T) = -2.45$

The final score is:

For baseform 1: $S_1 = 3.92$
For baseform 2: $S_2 = -2.11$
For baseform 3: $S_3 = -2.19$

The most likely baseform for the word "mostrarvi" is:

MH OO SH TH RR AA RH VH IO SP

The selected baseform is the correct one.

Table 1.    P1 Italian Phonetic Alphabet

| | |
|---|---|
| AA | The "A" sound as in "Assisi" or "Ciampino". |
| AS | The stressed "A" sound as in "Acqui" or "A". |
| BH | The weak "B" sound as in "Bari" or "Campobasso". |
| B2 | The geminate "BB" sound as in "Fabbri" or "Abbandona" |
| CH | The affricate "C" sound as in "Cesena" or "Cina". |
| C2 | The strong "C" sound as in "Faccia". |
| KH | The "K" sound as in "Ancona" or "Chieti". |
| K2 | The geminate "K" sound as in "Falk", "Zucca" or "Zucchi". |
| DH | The "D" sound as in "Lodi". |
| D2 | The geminate "DD" sound as "Adda". |
| EC | The stressed closed "E" sound as in "Chieti" or "Arezzo". |
| EE | The "E" sound as in "Alessandria" or "Berlino". |
| ES | The stressed open "E" sound as in "Berna" or "Biella". |
| FH | The "F" sound as in "Ferrara" or "Cefalu'". |
| F2 | The geminate "FF" sound as in "Affari". |
| DG | The affricate "G" sound as in "Giacca". |
| GD | The affricate "GG" sound as in "Faggeto". |
| GH | The velar "G" sound as in "Amburgo". |
| G2 | The geminate velar "G" sound as in "Agguato". |
| II | The "I" sound sound as in "Acireale" or "Comiso". |
| IJ | The semivowel "J" sound followed by vocalic sound as in "Alessandria" or "Biella". |
| IS | The stressed "I" sound as in "Cortina" or "Imola". |
| LH | The "L" sound as in "Alghero" or "Berlino". |
| L2 | The "LL" sound as in "Alleato". |
| MH | The "M" sound as in "Bormio" or "Como". |
| M2 | The "MM" sound as in "Lemma". |
| NH | The "N" sound not followed by an "F" or "V" or "C" or "K" sound as in "Abano" or "Alessandria". |
| N2 | The "NN" sound as in "Anno". |
| OC | The stressed closed "O" sound as in "Ancona" or "Cremona". |
| OO | The stressed closed "O" sound as in "Ascoli" or "Cortina". |
| OS | The stressed open "O" sound as in "Aosta" or "Foggia" |
| PH | The "P" sound as in "Capua" or "Parma". |
| P2 | The geminate "PP" sound as in "Nappa" or "Giappone". |
| RH | The "R" sound as in "Arezzo" or "Bari". |
| R2 | The "RR" sound as in "Brescia" or "Torres". |
| SH | Non sonorant "S" sound as in "Visto". |
| S2 | The "SS" sound as in "Sasso". |
| TH | The "T" sound as "Asti" or "Catania". |
| T2 | The geminate "TT" sound as in "Barletta" or "Rotterdam". |
| US | The stressed "U" sound as in "Amburgo" or "Cefalu'". |
| UU | The unstressed "U" sound as "Lugano" or "Fiumicino". |
| VH | The "V" sound as in "Cervia" or "Genova". |
| V2 | The geminate "VV" sound as in "Avvenire". |
| WH | The semivowel "U" sound as in "Capua" or "Nuoro". |

ZH    The sonorant "S" sound as in "Rosa".

TS    The non-sonorant "Z" sound followed by a non "Z" sound as in "Gorizia" or "Spezia".

ST    The strong non-sonorant "ZZ" sound as in "Nizza" or "Abruzzo".

DZ    The sonorant "Z" sound as in "Monza" or "Bolzano".

ZD    The strong sonorant "ZZ" sound as in "Arezzo" or "Pozzuoli".

GL    The "GL" sound as in "Cagliari" or "Castiglione".

GN    The "GN" sound as in "Bologna".

SC    The "SC" sound as in "Brescia".

SP    Silence phone used to end words.

&&    Null phone to be used when the sound is not pronounced.

Table 2.    P2 Italian Phonetic Alphabet

| | |
|---|---|
| AA | The "A" sound not at end of word, as in "Assisi" or "Ciampino". |
| AO | The "A" sound at the end of word, as in "Bologna" or "Brera". |
| AS | The stressed "A" sound as in "Acqui" or "A". |
| BH | The weak "B" sound as in "Bari" or "Campobasso". |
| B2 | The geminate "BB" sound as in "Fabbri" or "Abbandona" |
| CH | The affricate "C" sound as in "Cesena" or "Cina". |
| DG | The affricate "G" sound as in "Giacca". |
| J2 | The geminate "GG" sound. |
| DH | The "D" or geminate "DD" sound as in "Lodi" or "Adda" |
| DZ | The sonorant "Z" sound as in "Monza" or "Bolzano". |
| ZD | The strong sonorant "ZZ" sound as in "Arezzo" or "Pozzuoli". |
| D$ | A dummy phone that marks the beginning and end of a sentence. |
| EX | The close or open "E" sound as in "Enna" or "Brescia". |
| EC | The stressed closed "E" sound as in "Chieti" or "Arezzo". |
| EE | The unstressed closed "E" sound as in "Alessandria" or "Berlino". |
| EO | The "E" sound at the end of a word, as in "Arese" or "Crotone". |
| ES | The stressed open "E" as in "Berna" or "Biella". |
| FH | The "F" sound as in "Ferrara" or "Cefalu'". |
| GH | The velar "G" sound as in "Amburgo". |
| GL | The "GL" sound as in "Cagliari" or "Castiglione". |
| GN | The "GN" sound as in "Bologna" or "Foligno". |
| II | The "I" sound as in "Acireale" or "Comiso". |
| IJ | The semivowel "J" sound followed by vocalic sound as in "Alessandria" or "Biella". |
| IO | The "I" sound at the end of a word as in "Ascoli" or "Acqui". |
| IS | The stressed "I" sound as in "Cortina" or "Imola". |
| KH | The "K" sound as in "Ancona" or "Chieti". |
| K2 | The geminate "K" sound as in "Falk", "Zucca" or "Zucchi". |
| LH | The "L" sound as in "Alghero" or "Berlino". |
| L1 | The "L" sound preceded and followed by vocalic sound as in "Acireale" or "Alessandria". |
| MH | The "M" sound as in "Bormio" or "Como". |
| NG | The "NG" sound as in "Bengasi" or "Kong". |
| NH | The "N" sound not followed by an "F" or "V" or "C" or "K" sound as in "Abano" or "Alessandria". |
| NF | The "N" sound followed by a fricative sound as in "Manfredonia" or "Benvenuto". |
| NK | The "N" sound followed by a "C" sound as in "Ancona" or "Francoforte". |
| OX | The close or open "O" sound as in "Olbia" or "Po". |
| OA | The "O" sound at the end of the word, as in "Abano" or "Arezzo". |

| | | |
|---|---|---|
| OC | The stressed closed "O" sound as in "Ancona" or "Cremona". |
| OO | The unstressed closed "O" sound as in "Ascoli" or "Cortina". |
| OS | The stressed open "O" sound as in "Aosta" or "Foggia" |
| PH | The "P" sound as in "Capua" or "Parma". |
| P2 | The geminate "PP" sound as in "Nappa" or "Giappone". |
| RH | The "R" sound as in "Arezzo" or "Bari". |
| RR | The "RR" sound as in "Brescia" or "Torres". |
| SC | The "SC" sound as in "Brescia". |
| SH | Non sonorant "S" sound as in "Visto". |
| SP | A dummy phone that marks the end words. |
| TH | The "T" sound as "Asti" or "Catania". |
| T2 | The geminate "TT" sound as in "Barletta" or "Rotterdam". |
| TS | The non-sonorant "Z" sound followed by a non "Z" sound as in "Gorizia" or "Spezia". |
| ST | The strong non-sonorant "ZZ" sound as in "Nizza" or "Abruzzo". |
| US | The stressed "U" as in "Amburgo" or "Cefalu'". |
| UU | The unstressed "U" sound as in "Lugano" or "Fiume". |
| VH | The "V" sound as in "Cervia" or "Genova". |
| WH | The semivowel "U" sound as in "Capua" or "Nuoro". |
| ZH | The sonoran "S" sound as in "Rosa". |
| GP | The glottal pulse produced at the end of words with a final consonant, as in "Hong" or "Kong". |

Table 3. Translation rules from graphemes to P1 phonetic alphabet. The symbols < and > are used to include a phone class.

| Left context | Current Grapheme(s) | Right context | Phone or Phone class |
|---|---|---|---|
| | # | | SP |
| <nonvowel> | ' | | |
| | A | <nonaccent> | <AAorAS> |
| | A' | | AS |
| | B | <nonB> | BH |
| | BB | | B2 |
| | C | <AorOorU> | KH |
| | C | <EorI> | CH |
| | CH | <EorI> | KH |
| | CH | ' | KH |
| | CK | | K2 |
| | C | <nonvowel C H Q> | KH |
| | CQU | | K2 WH |
| | CC | <AorOorU> | K2 |
| | CC | <EorI> | C2 |
| | CCH | <EorI> | K2 |
| | CC | <nonvowel C H Q> | K2 |
| | D | <nonD> | DH |
| | DD | | D2 |
| | E | <nonaccent> | <EEorECorES> |
| | E' | | <ECorES> |
| | F | <nonF> | FH |
| | FF | | F2 |
| | G | <AorOorU> | GH |
| | G | <EorI> | DG |
| | GH | <EorI> | GH |
| | GN | | GN |
| | GLI | <AorEorOorU> | GL |
| | GLI | # | GL <IIorIS> |
| | GLI | <nonvowel#> | <GLorGH> <LHor&&> <IIorIS> |
| | GL | <nonI> | GH LH |
| | G | <nonvowel GH LN> | GH |
| | GG | <AorOorU> | G2 |
| | GG | <EorI> | GD |
| | GGH | <EorI> | G2 |
| | GG | <nonvowel> | G2 |
| | H | | |
| | I | <nonvowel'> | <IIorIS> |
| <CorG> | I | <vowel> | <IJorISoraə> |
| <nonCG> | I | <vowel> | <IJorIS> |
| | I' | | IS |
| | J | | <IJorDG> |
| | K | | KH |
| | L | <nonL> | LH |

```
                    ,  LL                ,                       ::  L2
                    ,  M                 ,  <nonM>               ::  MH
                    ,  MM                ,                       ::  M2
                    ,  N                 ,  <nonN>               ::  NH
                    ,  NN                ,                       ::  N2
                    ,  O                 ,  <nonaccent>          ::  <OOorOCorOS>
                    ,  O'                ,                       ::  <OCorOS>
                    ,  P                 ,  <nonP>               ::  PH
                    ,  PP                ,                       ::  P2
                    ,  QU                ,                       ::  KH  WH
                    ,  QQU               ,                       ::  K2  WH
                    ,  Q                 ,                       ::  KH
                    ,  R                 ,  <nonR>               ::  RH
                    ,  RR                ,                       ::  R2
#                   ,  S                 ,  <vowel>              ::  SH
<sonorant>          ,  S                 ,  <sonorant>           ::  <SHorZH>
<nonsonorant>       ,  S                 ,                       ::  SH
                    ,  S                 ,  <nonsonorant C>      ::  SH
                    ,  SS                ,                       ::  S2
                    ,  SC                ,  <AorOorU>            ::  SH  KH
                    ,  SC                ,  <EorI>               ::  SC
                    ,  SCH               ,  <EorI>               ::  SH  KH
                    ,  SC                ,  <nonvowel C H Q>::  SH  KH
                    ,  T                 ,  <nonT>               ::  TH
                    ,  TT                ,                       ::  T2
                    ,  U                 ,  <nonvowel'>          ::  <UUorUS>
                    ,  U                 ,  <vowel>              ::  <WHorUS>
                    ,  U'                ,                       ::  US
                    ,  V                 ,  <nonV>               ::  VH
                    ,  VV                ,                       ::  V2
                    ,  W                 ,                       ::  <WHorVH>
                    ,  X                 ,                       ::  KH  SH
                    ,  Y                 ,  <vowel>              ::  <IJorIS>
                    ,  Y                 ,  <nonvowel>           ::  <IIorIS>
                    ,  Z                 ,  <nonZ>               ::  <TSorDZ>
                    ,  ZZ                ,                       ::  <STorZD>
                    ,  #                 ,                       ::  SP
```

Table 4.  Translation rules from alphabet P1 to alphabet P2.
The symbols < and > are used to include a phone
class.

| Left phone or phone class | Current phone | Right phone or phone class | Phone or phone class |
|---|---|---|---|
|  | , AA | , SP | :: AO |
|  | , AA | , \<nonSP> | :: AA |
|  | , AS | , | :: AS |
|  | , BH | , | :: BH |
|  | , B2 | , | :: B2 |
|  | , B2 | , | :: B2 |
|  | , CH | , | :: CH |
|  | , C2 | , | :: CH |
|  | , KH | , | :: KH |
|  | , K2 | , | :: K2 |
|  | , DH | , | :: DH |
|  | , D2 | , | :: DH |
|  | , EE | , SP | :: EO |
|  | , EE | , \<nonSP> | :: EE |
|  | , EC | , | :: \<ECorEX> |
|  | , ES | , | :: \<ESorEX> |
|  | , FH | , | :: FH |
|  | , F2 | , | :: FH FH |
|  | , DG | , | :: DG |
|  | , GD | , | :: J2 |
|  | , GH | , | :: GH |
|  | , G2 | , | :: GH |
|  | , II | , \<nonSP> | :: II |
|  | , II | , SP | :: IO |
|  | , IS | , | :: IS |
|  | , IJ | , | :: IJ |
| \<vowel> | , LH | , IJ | :: L1 |
| \<vowel> | , LH | , \<vowel> | :: L1 |
| \<nonvowel> | , LH | , | :: LH |
|  | , LH | , \<nonvowel> | :: LH |
|  | , L2 | , | :: LH LH |
|  | , MH | , | :: MH |
|  | , M2 | , | :: MH MH |
|  | , NH GH | , | :: NG |
|  | , NH | , KH | :: NK |
|  | , NH | , FH | :: NF |
|  | , NH | , VH | :: NF |
|  | , NH | , \<nonGH KH FH VH> | :: NH |
|  | , N2 | , | :: NH NH |
|  | , OO | , SP | :: OA |
|  | , OO | , \<nonSP> | :: OO |
|  | , OC | , | :: \<OCorOX> |
|  | , OS | , | :: \<OSorOX> |
|  | , PH | , | :: PH |
|  | , P2 | , | :: P2 |
| SP | , RH | , | :: RH |
| \<vowel> | , RH | , | :: RH |

```
<nonvowel>    , RH       ,          :: RR
              , R2       ,          :: RH RH
              , SH       ,          :: SH
              , S2       ,          :: SH SH
              , ZH       ,          :: ZH
              , TH       ,          :: TH
              , T2       ,          :: T2
              , UU       ,          :: UU
              , US       ,          :: US
              , WH       ,          :: WH
              , VH       ,          :: VH
              , V2       ,          :: VH VH
              , TS       ,          :: TS
              , ST       ,          :: ST
              , DZ       ,          :: DZ
              , ZD       ,          :: ZD
              , GL       ,          :: GL
              , GN       ,          :: GN
              , SC       ,          :: SC
<vowel>       , SP       ,          :: SP
<nonvowel>    , SP       ,          :: GP SP
```

## Claims

1. A method for automatically producing the correct phonetic transcription for a word in a language, starting from the word spelling (S) and one utterance (U) of the word in said language by a speaker, characterized by the following steps:

   a) using phonotactical knowledge of said language for producing a list of all the possible phonetic transcriptions (T) of the word;

   b) calculating a probability score for each possible phonetic transcription (T) of the list obtained in step a), to generate the utterance (U) of the word by the speaker and

   c) selecting as most likely phonetic transcription (T) the one having the highest probability among all the probability scores calculated in step b).

2. A method according to claim 1 wherein the phonotactical knowledge of step a) is implemented through two sets of rules, typical of said language, the first set determining the ways a letter of the word spelling (S) can be uttered, given its context and the second set of rules pruning all the impossibile phonetic transcriptions.

3. A method according to claims 1 and 2, wherein the calculation of the probability for each possible phonetic transcription (T) is obtained combining the probability $P(U|T)$ that the speaker, pronouncing the phonetic transcription (T) produces the utterance U and the a priori probability $P(T)$ of the phonetic transcription (T).

4. A method according to claim 3, wherein the probability $P(T)$ is calculated as the product of the probability of each phone in the phonetic transcription (T), given its context.

5. A method according to claim 3, wherein the highest probability score of step c) of claim 1 is computed as a linear combination of $\log P(U|T)$ and $\log P(T)$ by two optimal weights $w_1$ and $w_2$ found through an iterative process.

6. An apparatus for automatically producing the correct phonetic transcription for a word in a language, starting from the word spelling (S) and one utterance (U) of the word in said language, including:
   - means (11) for storing the word spelling (S)
   - means (12) for storing the spelling-to-sound rules for said language

- means (13) for storing global rules for said language in order to prune the impossible phonetic transcriptions
- means (14) for obtaining all the phonetic transcriptions (T) of the word according to the rules stored in said means (12) and said means (13)
- means (15) for storing probabilistic decision trees characterized by
- calculator means (18) for determining the probability $P(U|T)$ that the speaker, pronouncing the sequence of phones contained in each of the possible phonetic transcriptions T stored in said means (14), utters sounds described by U
- calculator means (19) for determining the probabilty $P(T)$ of each of the possible phonetic transcriptions stored in said means (14), considering the left and right context of each letter of the word spelling (S), contained in said means (11), and using the probabilistic decision trees contained in said means (15) and
- calculator means (20) for determining the most probable phonetic transcription among those stored in said means (14), selecting the one having the highest value of $P(U|T)*P(T)$.

7. An apparatus according to claim 6, wherein said calculator means (20) determines the most probable phonetic transcription, computing the highest probability score for the phonetic transcriptions stored in said means (14) through a linear combination of $\log P(U|T)$ and $\log P(T)$ by two optimal weights $w_1$ and $w_2$.

Fig. 1

17

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | ICASSP'91 (1991 INTERNATIONAL CONFERENCE ON ACOUSTICS, SPEECH AND SIGNAL PROCESSING, Toronto, CA, 14th - 17th May 1991), vol. 1, pages 305-308, IEEE, New York, US; A. ASADI et al.: "Automatic modeling for adding new words to a large-vocabulary continuous speech recognition system" * Paragraph 3.3: "Probabilistic transformation of DECtalk transcriptions" * | 1,6 | G 10 L 5/06 |
| A | IBM TECHNICAL DISCLOSURE BULLETIN, vol. 32, no. 10B, March 1990, pages 9-10, Armonk, NY, US; "Automatic determination of phonetic Markov word models" | 1,6 | |
| A | ICASSP'91 (1991 INTERNATIONAL CONFERENCE ON ACOUSTICS, SPEECH AND SIGNAL PROCESSING, Toronto, CA, 14th - 17th May 1991), vol. 1, pages 169-172, IEEE, New York, US; T. YAMADA et al.: "Phonetic typewriter based on phoneme source modeling" * Paragraph 4: "Phonetic typewriter" * | 3,5,7 | TECHNICAL FIELDS SEARCHED (Int. Cl.5)<br><br>G 10 L 5/06 |
| A | IBM TECHNICAL DISCLOSURE BULLETIN, vol. 32, no. 10B, March 1990, pages 15-17, Armonk, NY, US: "Automatic correction of viterbi misalignments" | 2 | |

The present search report has been drawn up for all claims

| Place of search | Date of completion of the search | Examiner |
|---|---|---|
| THE HAGUE | 26-11-1992 | ARMSPACH J.F.A.M. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)